# EUROPEAN PATENT APPLICATION

(11) **EP 3 154 269 A1**
(43) Date of publication of application: **12.04.2017**
(21) Application number: 14873108.6
(22) Date of filing: 02.09.2014
(51) Int. Cl.: H04N 21/436

(54) **METHOD FOR SYNCHRONOUSLY SHARING VIDEO AMONG MOBILE TERMINALS AND SYSTEM THEREOF**

(30) Priority: 06.06.2014 CN 201410248568
(71) Applicant: Huizhou TCL Mobile Communication Co., Ltd., Huizhou, Guangdong 516006 (CN)
(72) Inventor: QIAN, Wen, HuiZhou Guangdong 516006 (CN); QIAO, HongWei, HuiZhou Guangdong 516006 (CN)
(74) Representative: Petraz, Gilberto Luigi
(86) International application number: PCT/CN2014/085771
(87) International publication number: WO 2015/184692

(57) **Abstract**

The present invention provides a mobile terminal video synchronous sharing method and system, wherein a first mobile terminal receives the pause command, pauses and acquires the information of the pause time of the current video; receives data synchronization command, and transmits the current video, and video to be played and the information of the pause time of the current video to a second mobile terminal; the second mobile terminal receives and continues to play according to the information of the pause time of the video. The present invention shares multimedia files synchronously between a plurality of mobile terminals, thereby increasing the interactivity.

## Description

### BACKGROUND OF THE INVENTION

### 1. Field of the Invention

The present invention relates to the field of multimedia synchronous sharing technology, in particular to a mobile terminal video synchronous sharing method and system.

### 2. Description of the Related Art

In technology nowadays, multimedia playback has become the basic function of mobile terminals. The use of mobile terminals for playing multimedia video and audio files is also more and more popular amongst users, especially young users. With the continuous development of network technology, information sharing between mobile terminals, or between mobile terminals and computers achieved through implementing Bluetooth or infrared, has been widely used.

In real life, users often use smart phones to watch videos or play games. When the user is unable to continue watching video or playing games, videos or games are usually paused. When the user is back home and continues to use the smart phone to watch videos or playing games, the user often cannot experience a better vision due to the smaller smartphone screen size.

Thus, the existing technology has yet to be improved and developed.

### SUMMARY OF THE INVENTION

In view of the lack of existing technology, the object of the present invention is to provide a mobile terminal video synchronous sharing method and system, making synchronous sharing a multimedia file between the mobile terminals possible, synchronously sharing a multimedia file on a mobile terminal with a smaller screen size to a mobile terminal with a bigger screen size, enhancing interactivity between mobile terminals.

The technical solutions of the present invention are as follows:
a mobile terminal video synchronous sharing system arranged for synchronously analyzing the first mobile terminal to the second mobile terminal, wherein a display size of the first mobile terminal is smaller than a display size of the second mobile terminal, comprising:
   a setting module, for setting play priorities corresponding to a plurality of videos to be played in the first mobile terminal in advance;
   a pausing and acquiring module, for the first mobile terminal to receive a pause command of the user, to pause a current video and acquire the information of a pause time of the current video;
   a synchronous transmitting module, for the first mobile terminal to transmit the current video, a plurality of videos to be played and the information of the pause time of the current video to the second mobile terminal, according to a data synchronization command;
   a synchronous playback module, for the second mobile terminal to receive the current video, the video to be played and the information of the pause time of the current video, and to continue to play the current video according to the current video and the information of the pause time of the current video;
   a selecting playback module, for the second mobile terminal to play the video to be played in order according to the play priority, when the current video playback is completed.

Preferably, in the mobile terminal video synchronous sharing system, the synchronous transmitting module further comprises:
a wireless connection activating unit, for determining whether the first terminal is connected to a charger to proceed the charging, and sending a wireless connection request to the second mobile terminal when the first mobile terminal is connected to the charger and charged;
a wireless connecting unit, for the second wireless mobile terminal to receive the connection request, and establish a wireless connection with the first mobile terminal;
a transmission unit, for the first mobile terminal to receive the data synchronization command of the user, and transmit the current video, the video to be played and the information of the pause time of the current video to the second mobile terminal. Preferably, in the mobile terminal video synchronous sharing system, the synchronous playback module further comprises:
a receiving unit, for the second mobile terminal to receive the current video, the video to be played and the information of the pause time of the current video, and store the current video, the video to be played and the information of the pause time of the current video;
a playback start time acquiring unit, for the second mobile terminal to acquire a playback start time of the current video according to the information of the pause time of the current video;
a synchronization control unit, for the first mobile terminal to receive a user operation command, transmit a synchronous playback control signal to the second mobile terminal; and
the size of the display of the first mobile terminal is smaller than the size of the display of the second mobile terminal.

The technical solutions of the present invention are as follows:
a mobile terminal video synchronous sharing method, wherein the method comprises the steps of:
   A, the first mobile terminal receives a pause command of the user to pause the current video, and acquire the information of the pause time of the current video;
   B, the first mobile terminal transmits the current video, a plurality of videos to be played and the information of the pause time of the current video to the second mobile terminal according to a data synchronization command;
   C, the second mobile terminal receives the current video, the video to be played and the information of the pause time of the current video, and continues to play the current video according to the current video and the information of the pause time of the current video.

The mobile terminal video synchronous sharing method, wherein the step B particularly comprises:
B1, determining whether the first terminal is connected to a charger to proceed the charging, and sending a wireless connection request to the second mobile terminal when the first mobile terminal is connected to the charger and charged;
B2, the second mobile terminal receives the wireless connection request, and establishes a wireless connection with the first mobile terminal;
B3, the first mobile terminal receives a user data synchronization command, and transmits the current video, the video to be played and the information of the pause time of the current video to the second mobile terminal.

Preferably, in the mobile terminal video synchronous sharing method, the step C particularly comprises:
C1, the second mobile terminal receives the current video, the video to be played and the information of the pause time of the current video, and stores the current video, the video to be played and the information of the pause time of the current video;
C2, the second mobile terminal acquires the start time of the current video according to the information of the pause time of the current video;
C3, the first mobile terminal receives a user operation command, and transmits a synchronous playback control signal to the second mobile terminal;
C4, the second mobile terminal receives the synchronous playback control signal, and together with the first mobile terminal at the same time continues to play the current video regarding the start time of the player as the start time of play of the video.

Preferably, in the mobile terminal video synchronous sharing method, before the Step A further comprises:
S, presetting the corresponding play priority of the plurality of videos to be played in the first mobile terminal.

Preferably, the mobile terminal video synchronous sharing method after step C further comprises:
D, when the current video playback is completed, the second mobile terminal plays the video to be played in order according to the play priority.
Preferably, the mobile terminal video synchronous sharing method, in which the size of the display of the first mobile terminal is smaller than the size of the display of the second mobile terminal.

A mobile terminal video synchronous sharing system, the system comprises:
a pausing and acquiring module, for the first mobile terminal to receive a pause command of the user, to pause a current video and acquire the information of a pause time of the current video;
a synchronous transmitting module, for the first mobile terminal to transmit the current video, a plurality of videos to be played and the information of the pause time of the current video to the second mobile terminal, according to a data synchronization command;
a synchronous playback module, for the second mobile terminal to receive the current video, the video to be played and the information of the pause time of the current video, and to continue to play the current video according to the current video and the information of the pause time of the current video.

Preferably, in the mobile terminal video synchronous sharing system, the synchronous transmitting module particularly comprises:
a wireless connection activating unit, for determining whether the first terminal is connected to a charger to proceed the charging, and sending a wireless connection request to the second mobile terminal when the first mobile terminal is connected to the charger and charged;
a wireless connecting unit, for the second wireless mobile terminal to receive the connection request, and establish a wireless connection with the first mobile terminal;
a transmission unit, for the first mobile terminal to receive the data synchronization command of the user, and transmit the current video, the video to be played and the information of the pause time of the current video to the second mobile terminal.

Preferably, in the mobile terminal video synchronous sharing system, the synchronous playback module particularly comprises:
a receiving unit, for the second mobile terminal to receive the current video, the video to be played and the information of the pause time of the current video, and store the current video, the video to be played and the information of the pause time of the current video;
a playback start time acquiring unit, for the second mobile terminal to acquire a playback start time of the current video according to the information of the pause time of the current video;
a synchronization control unit, for the first mobile terminal to receive a user operation command, transmit a synchronous playback control signal to the second mobile terminal;
a synchronization display unit, for the second mobile terminal to receive the synchronous playback control signal, and together with the first mobile terminal at the same time to continue to play the current video regarding the start time of the player as the start time of play of the video.

Preferably, the mobile terminal video synchronous sharing system further comprises:
a setting module, for setting play priorities corresponding to a plurality of videos to be played in the first mobile terminal in advance;
a selecting playback module, for the second mobile terminal to play the video to be played in order according to the play priority, when the current video playback is completed.

The present invention provides a mobile terminal video synchronous sharing method and system, the method comprises: a first mobile terminal receiving a pause command of the user to pause the current video, and acquires the information of the pause time of the current video; the first the mobile terminal transmits the current video, a plurality of videos to be played and the information of the pause time of the current video to the second mobile terminal according to a data synchronization command; the second mobile terminal receives the current video, the videos to be played and the information of the pause time of the current video, and continues to play the current video according to the information of the pause time of the current video. The present invention adds a new function to a mobile terminal: the multimedia file on a mobile terminal with a smaller screen size can be shared to a device with a larger screen, so more users can view the multimedia file, thus the interaction and sharing of the mobile terminal are increased.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
Figure 1 illustrates a flowchart of the mobile terminal video synchronous sharing method according to the preferred embodiment of the present invention.
Figure 2 illustrates a block diagram of the mobile terminal video synchronous sharing system according to the preferred embodiment of the present invention.

### DESCRIPTION OF THE EMBODIMENTS

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures.

The present invention provides a mobile terminal video synchronous sharing method and system. For the purposes of this invention, technical solutions, and the effects to be more clear and unambiguous, the present invention is described in further detail below with reference to accompanying drawings and embodiments. It should be understood that the specific embodiments described herein are only for explaining the present invention but not intended to limit the present invention.

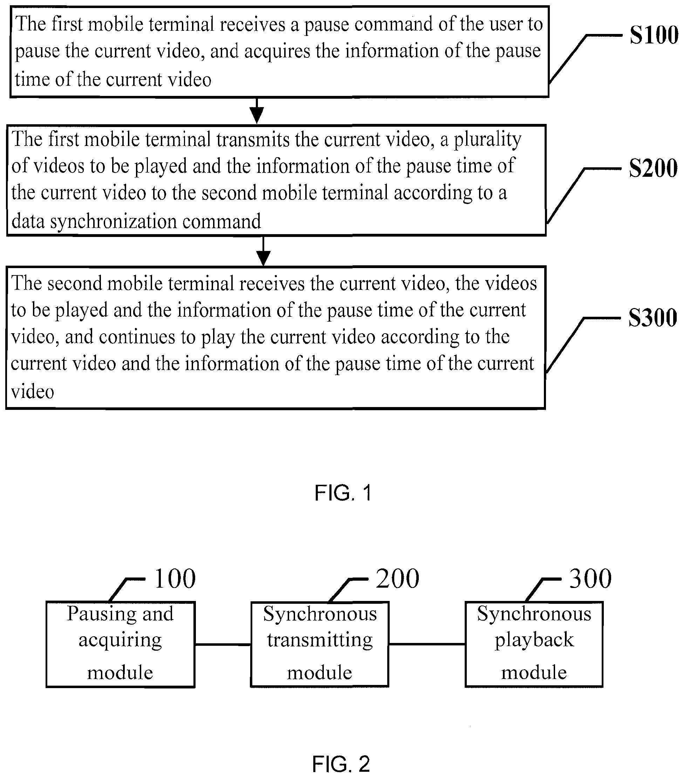

Refer to Figure 1, which illustrates a flowchart of the mobile terminal video synchronous sharing method according to the preferred embodiment of the present invention. As shown in Figure 1, the mobile terminal video synchronous sharing method comprises the steps of:
Step S100, the first mobile terminal receives a pause command of the user to pause the current video, and acquires the information of the pause time of the current video.

In a preferred embodiment of the present invention, before step S100 the method further comprises: a first terminal receives the user's operation command, selects a video and plays the selected video. When the user stops watching the current video, the first mobile terminal receives pause command of the user to pause the current video. In this case, in order to ensure that when the first mobile terminal continues to watch the current video next time, the current video can be continued from the last pause time point, so the first mobile terminal acquires the information of the pause time when the current video is paused.

Particularly, when the first mobile terminal receiving pause command of the user is detected, the command of the first mobile terminal to automatically record the current play time will be triggered to record the play time of the current video; after that, the current play time of the current video is repeatedly recorded with a cycle of 10 seconds, to enhance the accuracy of the information of the pause time of the current video acquired by the first mobile terminal, when the first mobile terminal pauses play of the current video.

Step S200, the first mobile terminal transmits the current video, a plurality of videos to be played and the information of the pause time of the current video to the second mobile terminal according to a data synchronization command.

The first mobile terminal not only stores the current video, but also stores a plurality of videos to be played. When the first mobile terminal receives a user data synchronization command, not only the information of the pause time of the current video acquired in step S100, but also the videos to be played are transmitted to the second mobile terminal.

Particularly, whether the video playlist in the second mobile terminal and the video playlist in the first mobile terminal are the same should be checked first, if they are, the information of the play time of the current video (that is, the play priority) is synchronized with the information of the pause time of the current video, if not, the video contents are synchronized first, then the information of the pause time of the current video is synchronized. When the user is connected to the second mobile terminal, the second mobile terminal starts to play at the pause point of the current video.

Step S300, the second mobile terminal receives the current video, the videos to be played and the information of the pause time of the current video, and continues to play the current video according to the current video and the information of the pause time of the current video.

When the second mobile terminal receives the current video, the videos to be played and the information of the pause time of the current video from the first mobile terminal, the second mobile terminal stores the current video, the videos to be played and the information of the paus time of the current video in the second mobile terminal. When the storage is completed, the second mobile terminal adjusts the current video playback time to the current video pause time in the step S100 according to the information of the pause time of the current video. When the second mobile terminal receives the user's playback operation command, the second mobile terminal starts from the pause time of the current video to continue to play the current video.

In the embodiment, before pausing the video and acquiring the information of the pause time in the step S100, further comprises:
Step S10, presetting the corresponding play priority of the plurality of videos to be played in the first mobile terminal.

Particularly, the first mobile terminal receives the operation command of the user, and the first mobile terminal sets the corresponding play priority of the plurality of videos to be played in the first mobile terminal. For example, the first mobile terminal selects a video in the playlist of the videos to be played, and presses for a long time, the long press action will trigger the mark command to play the priority orderly of the system, the first selected and long pressed video to be played will be marked as the highest priority of video playback, and the second selected and long pressed video to be played will be marked as the secondary priority of video playback, and so on, until the completion of the play priority setting of some or all of the video to be played.

When the play priority of all videos to be played are set, then after the playback of the current video is completed, the videos to be played are played in a descending order according to the play priority; when the priority setting of part of the videos to be played is completed, then the videos to be played with priority set are played first, the play order is descending according to the play priority, but the videos in the videos to be played without priority set will be randomly played after the play of the videos in the videos to be played is completed.

In the embodiment, after the synchronous playback of the videos in the step S300, further comprises:
Step S400, when the play of the current video is completed, the second mobile terminal plays the videos to be played orderly according to the play priority.
The play priority of the videos to be played is set in step S10, so when the play of the current video is completed, the second mobile terminal plays the videos to be played in a descending order according to the play priority. Through setting the play priority of the videos to be played, after the user watches the current video, the video to be played with the highest priority will be played automatically, without need for the user manually operate to select again, a great convenience is thus brought to the user.

Furthermore, in the embodiment, the specific process of the video synchronous transmitting in the step S200 comprises:
Step S201, determining whether the first terminal is connected to a charger to proceed the charging, and sending a wireless connection request to the second mobile terminal when the first mobile terminal is connected to the charger and charged;

The charging methods frequently used comprise: wired and wireless charging. Since the wired charging technology is an existing technology, description is skipped here. Wireless charging is a relatively mature technology now, the basic principle of wireless charging is as follows:
a wireless charging system mainly uses a electromagnetic induction principle, and
proceeds the energy coupling through a coil to transmit energy. When the system operates, the AC current is converted into direct current through a full bridge rectifier circuit at the input terminal, or directly supplies the system with a 24V DC terminal.

The DC current output from the power management module passes the 2M active crystal and gets converted into high frequency AC current to supply the primary winding. Through two induction coils coupling energy, the current output from the secondary coil is converted into DC current by the converting circuit to charge the battery.

It has been found that a changing magnetic field produces a changing electric field, and a changing electric field produces a varying magnetic field, wherein the value is associated with the rate of change, and the rate of change of the sine function is another sine function, so that electromagnetic waves can be spread out, and the induced voltage generated is relative to the change of the magnetic flux, so the change in magnetic field inside the coil generates the induced voltage, and thereby the charging process is completed.

In preferred embodiments of the present invention, it is determined whether the first mobile terminal is wirelessly charged, when it is detected that a wireless charger is displaced at the first mobile terminal for wireless charging, then wifi is automatically activated, by establishing via a wireless router, and then connected to the home wireless LAN. Meanwhile, the wifi of the second mobile terminal is activated and connected to the wireless local area network in user's home, so when the wifi of the first mobile terminal is activated and connected to the wireless local area network in user's home, the second mobile terminal is searched automatically, and the request for establishing a wireless connection to the second mobile terminal is sent.

Since the battery power of the mobile terminal is limited, so data transmission and communication for a long time consume a lot of battery power. Therefore, a determine condition is added to the preferred embodiment of the present invention, that is, after the first mobile terminal is charged completely by the wireless charger, the video synchronous sharing will proceed, so that the electricity shortage of the mobile terminal during the data transmission can be effectively avoided.

Step S202, the second mobile terminal receives the wireless connection request, and establishes a wireless connection to the first mobile terminal;
When the second mobile terminal receives the wireless connection request, and gets wirelessly connected to the first mobile terminal via the wireless local area network in user's home, the first mobile terminal and the second mobile terminal can transmit, share, and synchronize data.

Step S203, the first mobile terminal receives a data synchronization command of the user, then transmits the current video, the videos to be played and the information of the pause time of the current video to the second mobile terminal.

In a preferred embodiment of the present invention, when the first mobile terminal receives a data synchronization command of the user, then transmits the current video and the information of the pause time of the current video to the second mobile terminal, and transmits the videos to be played and the play priority information of the videos to be played to the second mobile terminal at the same time.

Furthermore, in the embodiment, the specific process of the video synchronous transmitting in the step S300 comprises:
Step S301, the second mobile terminal receives the current video, the videos to be played and the information of the pause time of the current video, and stores the current video, the videos to be played and the information of the pause time of the current video.

Since the first mobile terminal and the second mobile terminal are both connected through the wifi to a wireless LAN at home, the transmission and synchronization of data between the first mobile terminal and the second mobile terminal has a high data transmission rate, generally between 11Mbps-108 Mbps.
Step S302, the dwell time of the second mobile terminal acquires the start time of play of the current video according to the information of the pause time of the current video.

In order to ensure that after the current video is transmitted from the first mobile terminal to the second mobile terminal, and the current video can be continued by the second terminal from the last pause time point, the first mobile terminal needs to transmit the information of the pause time of the current video to the second mobile terminal, the second mobile terminal adjusts the current video playback time to the pause time of the current video in the step S100 according to the information of the pause time of the current video.

Step S303, the first mobile terminal receives the operation command of the user, and transmits a synchronous playback control signal to the second mobile terminal.

Currently, a home wireless network is often built using the most current technology, DLNA. DLNA (Digital Living Network Alliance) is sponsored by Sony, Intel, Microsoft, and other companies to set up and resolve interconnection between wireless networks and wired networks including personal PCs, consumer electronics, and mobile devices, so that unrestricted sharing and growth of digital media and content services will be possible. DLNA include DMS (Digital Media Server), DMR (Digital Media Receiver), DMC (Digital Media Control) and DMP (Digital Media Player).

In the preferred embodiment of the present invention, when the first mobile terminal and the second mobile terminal are connected through DLNA technology, the first mobile terminal acts in the role of DMS in a DLNA network, and provides video information and all kinds of information for the second mobile terminal, the second mobile terminal acts in the role of DMP in a DLNA network, and acts as a digital multimedia file player. When the user selects the first mobile terminal to act in the role of DMC in DLNA network, then the video data and all kinds of information on the first mobile terminal can be transmitted to a third mobile terminal already connected to the DLNA network, and the third mobile terminal acts as the role of DMS in DLNA network. At this time, the first mobile terminal may send a control signal to control the second mobile terminal, the first mobile terminal can control the second mobile terminal via the control signal.

Step S304, the second mobile terminal receives the synchronized playback control signal, and together with the first mobile terminal at the same time continues to play the current video regarding the start time of the player as the start time of play of the video.

Because the start time of play of the current video has been acquired in step S302, the second mobile terminal can continue to play the current video regarding the start time of the player as the start time of play of the video together with the first mobile terminal at the same time, when it receives the synchronous playback control signal, to realize the synchronous playback between a plurality of mobile terminals.

In further embodiments, the size of the display of the first mobile terminal is smaller than the size of the display of the second mobile terminal.

Clearly, in order to increase the user's visual experience, often the multimedia file on a mobile terminal with a smaller displayer size can be transferred to a mobile terminal with a big displayer, and the multimedia file is played on a mobile terminal with a big displayer.

Based on the above method, the present invention also provides a mobile terminal video synchronous sharing system, as shown in Figure 2, a block diagram of the mobile terminal video synchronous sharing system according to the preferred embodiment of the present invention, the mobile terminal share video synchronization the system comprises:
a pausing and acquiring module 100, for a first mobile terminal to receive pause command of the user to pause the current video, and acquire the information of the pause time of the current video;
a synchronous transmitting module 200, for the first mobile terminal to transmit the current video , a plurality of video to be played and the information of the pause time of the current video is transmitted to the second mobile terminal according to a data synchronization command;
a synchronous playback module 300, for the second mobile terminal to receive the current video and the information of the pause time of the current video, and continue to play the current video according to the current video and the information of the pause time of the current video.

A further embodiment of the synchronous transmitting module 200 particularly comprises:
a wireless connection activating unit, for determining whether the first terminal is connected to a charger to proceed the charging, and sending a wireless connection request to the second mobile terminal when the first mobile terminal is connected to the charger and charged;
a wireless connecting unit, for the second wireless mobile terminal to receive the connection request, and establish a wireless connection with the first mobile terminal;
a transmission unit, for the first mobile terminal to receive the data synchronization command of the user, and transmit the current video, the video to be played and the information of the pause time of the current video to the second mobile terminal.

A further embodiment of the synchronous playback module 300 particularly comprises:
a receiving unit, for the second mobile terminal to receive the current video, the video to be played and the information of the pause time of the current video, and store the current video, the video to be played and the information of the pause time of the current video;
a receiving unit, for the second mobile terminal to receive the current video, the video to be played and the information of the pause time of the current video, and store the current video, the video to be played and the information of the pause time of the current video;
a playback start time acquiring unit, for the second mobile terminal to acquire a playback start time of the current video according to the information of the pause time of the current video;
a synchronization control unit, for the first mobile terminal to receive a user operation command, transmit a synchronous playback control signal to the second mobile terminal;
a synchronous playback unit, for the second mobile terminal to receive the synchronous playback control signal, and together with the first mobile terminal at the same time continues to play the current video regarding the start time of the player as the start time of play of the video.

A further embodiment of the mobile terminal video synchronous sharing system further comprises:
a setting module, for setting play priorities corresponding to a plurality of videos to be played in the first mobile terminal in advance;
a selecting playback module, for the second mobile terminal to play the video to be played in order according to the play priority, when the current video playback is completed.

In summary, the present invention provides a mobile terminal video synchronous sharing method and system, the method comprises: a first mobile terminal receiving a pause command of the user to pause the current video, and acquire the information of the pause time of the current video; the first mobile terminal receives a data synchronization command, transmits the current video, a plurality of videos to be played and the information of the pause time of the current video to the second mobile terminal; the second mobile terminal receives the current video, the video to be played and the information of the pause time of the current video, and continues to play the current video according to the current video and the information of the pause time of the current video. Due to the multimedia file on a mobile terminal with a smaller screen size can be shared to a device with a big screen to be played synchronously, so more users can view the multimedia file, thus the interaction and sharing of the mobile terminal are increased.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A mobile terminal video synchronous sharing system for synchronous analyzing a first mobile terminal synchronously to a second mobile terminal, wherein a display size of the first mobile terminal is smaller than a display size of the second mobile terminal, comprising:
a setting module, for setting play priorities corresponding to a plurality of videos to be played in the first mobile terminal in advance;
a pausing and acquiring module, for the first mobile terminal to receive a pause command of a user, and to pause a current video and acquire the information of a pause time of the current video;
a synchronous transmitting module, for the first mobile terminal to transmit the current video, a plurality of videos to be played and the information of the pause time of the current video to the second mobile terminal, according to a data synchronization command;
a synchronous playback module, for the second mobile terminal to receive the current video, the video to be played and the information of the pause time of the current video, and to continue to play the current video according to the current video and the information of the pause time of the current video;
a selecting playback module, for the second mobile terminal to play the video to be played in order according to the play priorities after the playback of the current video is completed.

2. The mobile terminal video synchronous sharing system according to claim 1, wherein the synchronous transmitting module particularly comprises:
a wireless connection activating unit, for determining whether the first terminal is connected to a charger to proceed charging, and sending a wireless connection request to the second mobile terminal when the first mobile terminal is connected to the charger and charged;
a wireless connecting unit, for the second wireless mobile terminal to receive the wireless connection request and establish a wireless connection with the first mobile terminal;
a transmission unit, for the first mobile terminal to receive the data synchronization command of a user and transmit the current video, the video to be played and the information of the pause time of the current video to the second mobile terminal.

3. The mobile terminal video synchronous sharing system according to claim 1, wherein the synchronous playback module particularly comprises:
a receiving unit, for the second mobile terminal to receive the current video, the video to be played and the information of the pause time of the current video, and store the current video, the video to be played and the information of the pause time of the current video;
a playback start time acquiring unit, for the second mobile terminal to acquire a playback start time of the current video according to the information of the pause time of the current video;
a synchronization control unit, for the first mobile terminal to receive a user operation command, transmit a synchronous playback control signal to the second mobile terminal; and
wherein the size of the display of the first mobile terminal is smaller than the size of the display of the second mobile terminal.

4. A mobile terminal video synchronous sharing method, wherein the method comprises the steps of:
receiving a pause command of a user to pause the current video, and acquiring the information of a pause time of a current video by a first mobile terminal;
transmitting the current video, a plurality of videos to be played and the information of the pause time of the current video to the second mobile terminal by the first mobile terminal according to a data synchronization command;
receiving the current video, the video to be played and the information of the pause time of the current video, and continuing to play the current video by the second mobile terminal according to the current video and the information of the pause time of the current video.

5. The mobile terminal video synchronous sharing method according to claim 4, wherein the step of transmitting the current video, a plurality of videos to be played, and the information of the pause time of the current video by the first terminal to the second mobile terminal according to a data synchronization command particularly comprises:
determining whether the first terminal is connected to a charger to proceed charging, and sending a wireless connection request to the second mobile terminal when the first mobile terminal is connected to the charger and charged;
receiving the wireless connection request, and establishing a wireless connection with the first mobile terminal;
receiving a user data synchronization command, and transmitting the current video, the video to be played and the information of the pause time of the current video to the second mobile terminal.

6. The mobile terminal video synchronous sharing method according to claim 4, wherein the step that the second mobile terminal performs particularly comprises:
receiving the current video, the video to be played and the information of the pause time of the current video, and storing the current video, the video to be played and the information of the pause time of the current video;
acquiring the start time of the current video according to the information of the pause time of the current video;
receiving a user operation command, and transmitting a synchronous playback control signal to the second mobile terminal; and
receiving the synchronous playback control signal, and together with the first mobile terminal in the same time continuing to play the current video regarding the start time of the player as the start time of play of the video.

7. The mobile terminal video synchronous sharing method according to claim 4, wherein the presetting step comprises:
presetting the corresponding play priority of the plurality of videos to be played in the first mobile terminal.

8. The mobile terminal video synchronous sharing method according to claim 7, wherein the step further comprises:
playing the video to be played in order according to the play priority, when the current video playback is completed.

9. The mobile terminal video synchronous sharing method according to claim 8, wherein the size of the display of the first mobile terminal is smaller than the size of the display of the second mobile terminal.

10. A mobile terminal video synchronous sharing system, wherein the system comprises:
a pausing and acquiring module, for the first mobile terminal to receive a pause command of a user, to pause a current video and acquire the information of a pause time of the current video;
a synchronous transmitting module, for the first mobile terminal to transmit the current video, a plurality of videos to be played and the information of the pause time of the current video to the second mobile terminal, according to a data synchronization command;
a synchronous playback module, for the second mobile terminal to receive the current video, the video to be played and the information of the pause time of the current video, and to continue to play the current video according to the current video and the information of the pause time of the current video.

11. The mobile terminal video synchronous sharing system according to claim 10, wherein the synchronous transmitting module particularly comprises:
a wireless connection activating unit, for determining whether the first terminal is connected to a charger to proceed the charging, and sending a wireless connection request to the second mobile terminal when the first mobile terminal is connected to the charger and charged;
a wireless connecting unit, for the second wireless mobile terminal to receive the connection request and establish a wireless connection with the first mobile terminal;
a transmission unit, for the first mobile terminal to receive the data synchronization command of a user, and transmit the current video, the video to be played and the information of the pause time of the current video to the second mobile terminal.

12. The mobile terminal video synchronous sharing system according to claim 10, wherein the synchronous playback module particularly comprises:
a receiving unit, for the second mobile terminal to receive the current video, the video to be played, and the information of the pause time of the current video, and store the current video, the video to be played and the information of the pause time of the current video;
a playback start time acquiring unit, for the second mobile terminal to acquire a playback start time of the current video according to the information of the pause time of the current video;
a synchronization control unit, for the first mobile terminal to receive a user operation command, transmit a synchronous playback control signal to the second mobile terminal;
a synchronization display unit, for the second mobile terminal to receive the synchronous playback control signal, and together with the first mobile terminal at the same time to continue to play the current video regarding the start time of the player as the start time of play of the video.

13. The mobile terminal video synchronous sharing system according to claim 10, wherein the system further comprises:
a setting module, for setting play priorities corresponding to a plurality of videos to be played in the first mobile terminal in advance;
a selecting playback module, for the second mobile terminal to play the video to be played in order according to the play priority, when the current video playback is completed.
